# EUROPEAN PATENT SPECIFICATION

(11) **EP 3 499 480 B1**
(45) Date of publication and mention of the grant of the patent: **18.09.2024**
(21) Application number: 17839176.9
(22) Date of filing: 20.07.2017
(51) Int. Cl.: G08G 1/09, B60K 31/00, B60R 21/00, B60W 30/14, G06T 7/00, G08G 1/16, B60W 40/04, B60W 50/14, G08G 1/0962

(54) **DISPLAYED CONTENT RECOGNITION DEVICE AND VEHICLE CONTROL DEVICE**
VORRICHTUNG ZUR ERKENNUNG VON ANGEZEIGTEN INHALTEN UND FAHRZEUGSTEUERUNGSVORRICHTUNG
DISPOSITIF DE RECONNAISSANCE DE CONTENU AFFICHÉ ET DISPOSITIF DE COMMANDE DE VÉHICULE

(30) Priority: 09.08.2016 JP 2016156076
(43) Date of publication of application: 19.06.2019
(73) Proprietor: Hitachi Astemo, Ltd., Hitachinaka-shi, Ibaraki 312-8503 (JP)
(72) Inventor: ENDO, Takeshi, Tokyo 100-8280 (JP); NAGASAKI, Takeshi, Hitachinaka-shi, Ibaraki 312-8503 (JP); SHIINA, Yuhi, Hitachinaka-shi, Ibaraki 312-8503 (JP); KIDO, Hideaki, Hitachinaka-shi, Ibaraki 312-8503 (JP)
(74) Representative: Strehl Schübel-Hopf & Partner
(86) International application number: PCT/JP2017/026236
(87) International publication number: WO 2018/030103

(56) References cited:
- EP-A1- 2 950 291
- WO-A1-2015/152304
- JP-A- 2006 264 524
- JP-A- 2009 110 394
- JP-A- 2015 170 113
- JP-A- 2015 199 439
- JP-A- 2016 130 971
- JP-A- 2017 062 696
- JP-A- 2017 194 948
- US-A1- 2009 041 304
- US-A1- 2010 188 288
- US-A1- 2013 101 174
- US-B1- 6 560 529

## Description

### Technical Field

The present invention relates to a displayed content recognition device and a vehicle control device.

### Background Art

In order to realize automatic driving and prevent traffic accidents, recognition of road signs and pavement markings and vehicle control according to the recognition are important and great interest has been received. In order to recognize road signs and pavement markings, accurate recognition is necessary. Thus, for example, PTL 1 discloses a pavement marking recognition device that accurately recognizes a road marking including blurring by judging whether a road marking specified by analyzing an in-vehicle camera image matches a road shape.

### Citation List

### Patent Literature

PTL 1: JP 4973736 A

US 2009/041304 A1 discloses a vehicle control device with the features in the preamble of present claim 1. Other conventional vehicle control devices are described in US 2010/188288 A1, US 2013/101174 A1, US 6 560 529 B1, and EP 2 950 291 A1.

### Summary of Invention

### Technical Problem

However, the road shape utilized in the device of PTL 1 is used when one recognition result is obtained by image recognition to verify whether this recognition result is correct and, in a case where an incorrect recognition result is obtained at the time point of image recognition, it is impossible to finally make a correct determination even if the road shape is utilized.

Therefore, in a case where the recognition result of the image recognition includes an error, such as when a road sign or a pavement marking is present in a long distance or when shielding or the like due to a three-dimensional object such as a vehicle or a tree has occurred, the pavement marking cannot be accurately recognized.

The purpose of the present invention is to provide: a displayed content recognition device that can accurately determine displayed content for a displayed object on the basis of camera images; and a vehicle control device.

### Solution to Problem

The present invention is defined by the subject-matter of claim 1. The dependent claims relate to preferred modifications.

### Advantageous Effects of Invention

According to the present invention, it is possible to accurately determine the displayed content for a displayed object on the basis of camera images.

### Brief Description of Drawings

[FIG. 1] FIG. 1 is a functional block diagram illustrating the configuration of a displayed content recognition device according to an embodiment of the present invention.
[FIG. 2] FIG. 2 is an explanatory diagram relating to a method of extracting displayed content candidates in the embodiment disclosed in FIG. 1.
[FIG. 3] FIG. 3 is an explanatory diagram relating to a method of determining displayed content in the embodiment disclosed in FIG. 1.
[FIG. 4] FIG. 4 is a diagram illustrating an example of a traffic standard for maximum speed limitation on an ordinary road.
[FIG. 5] FIG. 5 is a diagram illustrating an example of a traffic standard for maximum speed limitation on an expressway.
[FIG. 6] FIG. 6 is a diagram illustrating an example of likelihoods of displayed content candidates estimated on the basis of the traffic standard in FIG. 4.
[FIG. 7] FIG. 7 is a diagram illustrating an example of likelihoods of displayed content candidates estimated on the basis of the traffic standard in FIG. 5.
[FIG. 8] FIG. 8 is a diagram illustrating an example of predetermined priorities for a speed limit.
[FIG. 9] FIG. 9 is a flowchart illustrating an example of the operation of the displayed content recognition device disclosed in FIG. 1.
[FIG. 10] FIG. 10 is a flowchart illustrating an example of the operation of the displayed content recognition device disclosed in FIG. 1.
[FIG. 11] FIG. 11 is a flowchart illustrating an example of the operation of the displayed content recognition device in the embodiment disclosed in FIG. 1.
[FIG. 12] FIG. 12 is a functional block diagram illustrating the configuration of a vehicle control device according to an example useful to understand the present invention.
[FIG. 13] FIG. 13 is an explanatory diagram relating to a method of designating a vehicle control signal in the example disclosed in FIG. 12.
[FIG. 14] FIG. 14 is a flowchart illustrating an example of the operation of the vehicle control device in the embodiment disclosed in FIG. 12.
[FIG. 15] FIG. 15 is a flowchart illustrating an example of the operation of the vehicle control device in the example disclosed in FIG. 12.
[FIG. 16] FIG. 16 is a flowchart illustrating an example of the operation of the vehicle control device in the example disclosed in FIG. 12.

### Description of Embodiments

Embodiments of the present invention will be described in detail below.

### Embodiment

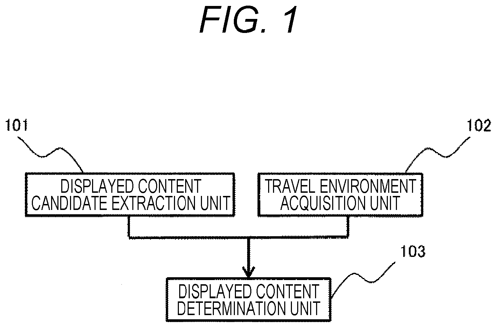

FIG. 1 depicts functional blocks illustrating the configuration of a displayed content recognition device according to an embodiment. The displayed content recognition device of the present embodiment includes: a displayed content candidate extraction unit 101 that recognizes displayed content for a displayed object (specifically, a road sign and a pavement marking) on the basis of camera images; a travel environment acquisition unit 102 that acquires travel environment of a host vehicle; and a displayed content determination unit 103 that determines the displayed content on the basis of the candidates for the displayed content extracted by the displayed content candidate extraction unit 101 and the travel environment acquired by the travel environment acquisition unit 102.

The displayed content candidate extraction unit 101 first specifies an area of an acquired image, specifically, in which portion of the image a road sign or a pavement marking appears. Thereafter, a candidate for displayed content for the road sign or the pavement marking is extracted for the specified area.

In specifying the area, for example, if a target to be recognized is a circular road sign, an edge may be found out in the image such that the Hough transformation using the acquired edge is performed to specify the sign position in the image. Alternatively, the above technique may be replaced with, for example, a maximally stable extremal regions (MSER) algorithm using pixel density information or the like.

In extracting the displayed content candidate for the specified area, first, a likelihood for the displayed content for each recognition target is worked out for the specified area. As a calculation of likelihood, for example, a large number of templates may be prepared in advance for each recognition target such that the correlation between the template and a candidate area is utilized, or a model of the recognition target may be created in a statistical manner on the basis of machine learning such that the correlation with this statistical model is utilized. Next, the displayed content candidate extraction unit 101 confirms whether or not the likelihood of each recognition target is equal to or greater than a predetermined threshold value and assigns a recognition target having a likelihood equal to or greater than the threshold value as a candidate for displayed content; then outputs a road sign/pavement marking type corresponding to the likelihood.

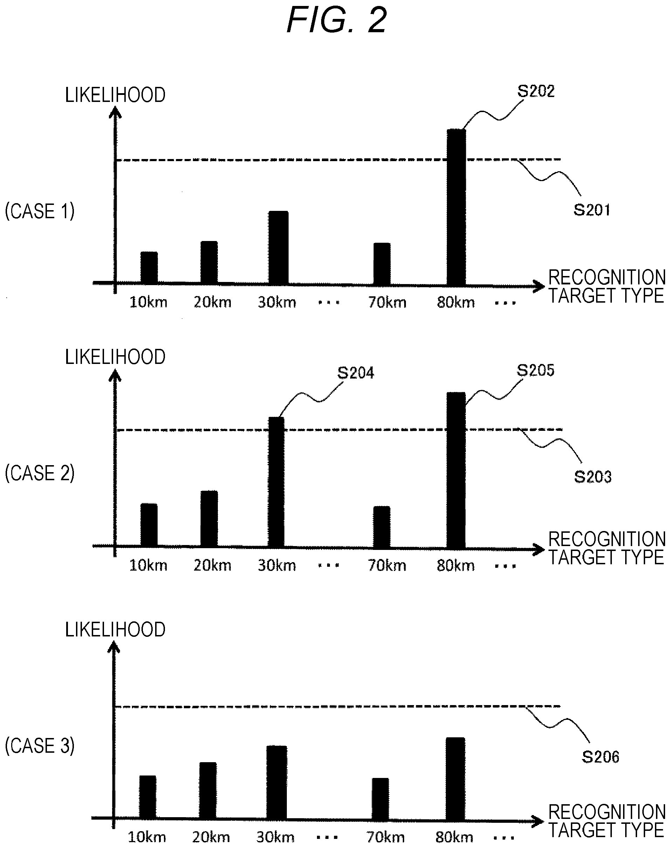

The procedure of extracting a displayed content candidate by the displayed content candidate extraction unit 101 will be described with reference to FIG. 2. For example, when the result illustrated in case 1 in FIG. 2 is acquired using a template or a statistical model, a recognition target having a likelihood equal to or greater than a predetermined threshold value (S201 in FIG. 2) is only 80 km/h maximum speed restriction (S202 in FIG. 2), such that 80 km/h maximum speed restriction and the likelihood thereof are output as an output.

When the result illustrated in case 2 in FIG. 2 is acquired, a recognition target having a likelihood equal to or greater than a predetermined threshold value (S203 in FIG. 2) is 30 km/h maximum speed restriction (S204 in Fig. 2) and 80 km/h maximum speed restriction (S205 in FIG. 2), such that 30 km/h maximum speed restriction and 80 km/h maximum speed restriction, and respective likelihoods thereof are output as an output.

When the result illustrated in case 3 in FIG. 2 is acquired, since there is no recognition target having a likelihood equal to or greater than a predetermined threshold value (S206 in FIG. 2), a candidate for displayed content is not output.

Although the above-described method of extracting the displayed content candidate uses one absolute threshold value, the method may be based on different references. For example, as a relative threshold value, the likelihood of a recognition target having the highest likelihood may be assigned as a reference such that a recognition target whose difference between this value and the likelihood thereof is equal to or smaller than a predetermined value is assigned as a candidate for displayed content.

Although the displayed content candidate extraction unit 101 described above outputs the displayed content for a recognition target satisfying the threshold value condition, a candidate not satisfying the threshold value condition may be extracted. That is, in this case, the likelihoods of all the recognition targets and the number of candidates for displayed content satisfying the threshold value condition are output.

The travel environment acquisition unit 102 acquires the travel environment around the host vehicle using at least one of a camera image, vehicle speed information, or map information registered in a car navigation system. The travel environment here is information relating to an installation standard for road signs and pavement markings, including expressway, ordinary road, the number of lanes, the number of pedestrians, presence/absence of a median strip, and road shapes such as curve radius, lane width, and shoulder width.

As a method of determining whether the road on which the host vehicle is traveling is an expressway or an ordinary road using a camera image, a gate image installed at an entrance or exit of an expressway may be held in advance as a template such that template matching using this template is performed, or since there are basically no pedestrians on the expressway, information on both of pedestrian recognition and the number of pedestrians may be used to acquire information on whether the road on which the host vehicle is currently traveling is an expressway or an ordinary road.

As a method of acquiring the number of lanes, the median strip, and the number of pedestrians using a camera image, for example, a large number of white line templates, median strip templates, and pedestrian templates may be prepared in advance, respectively, such that the number of lanes, the median strip, and the number of pedestrians are acquired by template matching using these templates, or information on respective items may be acquired by a statistical method using machine learning.

As a method of acquiring a road shape using a camera image, triangulation may be performed using an image acquired at every frame to create a three-dimensional map around the host vehicle, or white line detection may be performed to acquire road shape information on the basis of a result of the white line detection.

Although the above explanation relates to a method of acquiring the travel environment based on a camera image, when the vehicle speed is used, whether the traveling road is an expressway or an ordinary road may be determined using the vehicle speed information up to the present time. According to this method, for example, when the vehicle speed is 80 km/h or faster for a predetermined time or longer until the present time, it is determined that the traveling road is an expressway and the travel environment information that the current traveling road is an expressway is acquired. In addition, information that the traveling road is an ordinary road may be acquired in a case where this condition is not satisfied.

When the travel environment is acquired using the map information in the car navigation system, the number of lanes written on the map, road shape information and the like are read using the host vehicle position as a reference and used.

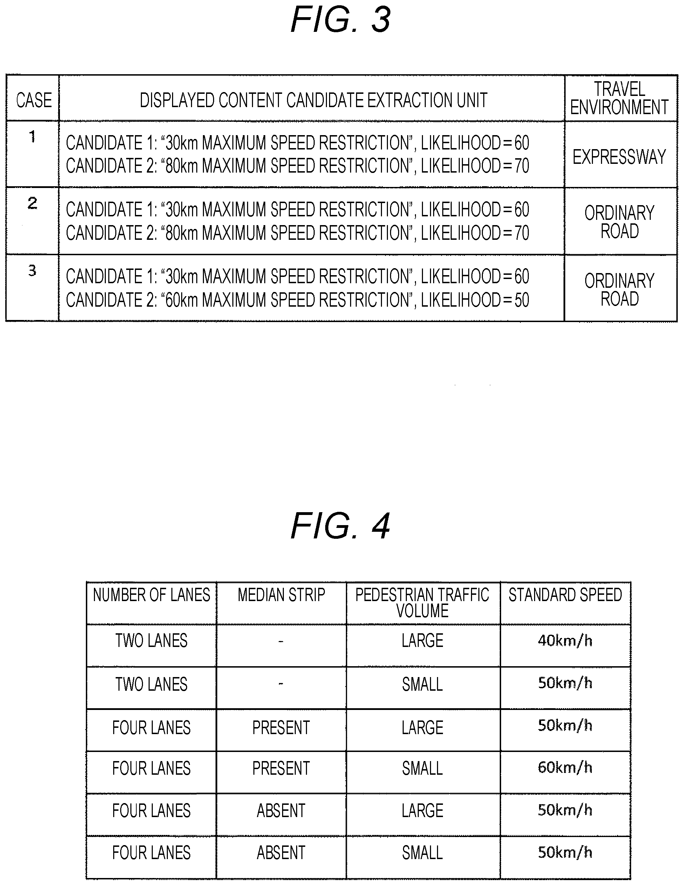

The travel environment acquisition unit 103 determines displayed content for a road sign or a pavement marking in the image, using the output of the displayed content candidate extraction unit 101 and the travel environment information acquired by the travel environment acquisition unit 102. The process of the travel environment acquisition unit 103 will be described in detail with reference to FIG. 3.

FIG. 3 illustrates output examples of the displayed content candidate extraction unit 101 and the travel environment acquisition unit 102. Case 1 in FIG. 3 represents a case where the displayed content candidate extraction unit 101 has extracted 30 km/h maximum speed limitation and 80 km/h maximum speed limitation as candidates for displayed content, and the travel environment acquisition unit 202 has acquired a travel environment in which the traveling path of the host vehicle is an expressway. At this time, since a 30 km/h maximum speed restriction sign is not installed on the expressway, the displayed content determination unit 103 determines that the road sign captured in the image is an 80 km/h maximum speed restriction sign.

Case 2 in FIG. 3 denotes a case where the displayed content candidate extraction unit 101 has extracted 30 km/h maximum speed limitation and 80 km/h maximum speed limitation as candidates for displayed content, and the travel environment acquisition unit 202 has acquired a travel environment in which the traveling path of the host vehicle is an ordinary road. At this time, since an 80 km/h maximum speed restriction sign is not installed on the ordinary road, the displayed content determination unit 103 determines that the road sign captured in the image is a 30 km/h maximum speed restriction sign.

Case 3 in FIG. 3 denotes a case where the displayed content candidate extraction unit 101 has extracted 30 km/h maximum speed limitation and 60 km/h maximum speed limitation as candidates for displayed content, and the travel environment acquisition unit 202 has acquired a travel environment in which the traveling path of the host vehicle is an ordinary road. At this time, since both of 30 km/h maximum speed limitation and 60 km/h maximum speed limitation have the possibility of being installed on the ordinary road, the displayed content determination unit 103 refers to the likelihoods output by the displayed content candidate extraction unit 101 and determines the 30 km/h maximum speed limitation having a higher likelihood, as displayed content.

As described above, according to the present embodiment, in a case where the recognition result of the image recognition includes an error, such as when a road sign or a pavement marking is present in a long distance or when shielding or the like due to a three-dimensional object such as a vehicle or a tree has occurred, multiple candidates are extracts as displayed content candidates and one of those candidates matching the travel environment is selected, whereby it is possible to recognize the displayed content for the road sign or the pavement marking with high accuracy. In addition, as described above, the present embodiment is characterized in that the recognition result varies according to the travel environment and, when the same road sign or pavement marking is captured by the camera in a different travel environment, a different recognition result is output.

In the present embodiment, the displayed content recognition unit 103 selects one candidate that matches the travel environment acquired by the travel environment acquisition unit 102, from among the candidates extracted by the displayed content candidate extraction unit 101. However, this configuration may be changed to a configuration described below, in which the travel environment acquired by the travel environment acquisition unit 102 is converted into the likelihood of a road sign or a pavement marking installed around the host vehicle, on the basis of the traffic standard, and a result of the conversion and the result of the displayed content candidate extraction unit 101 are combined to determine the displayed content.

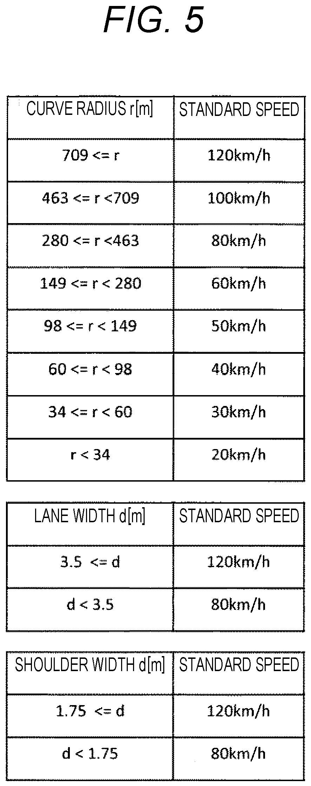

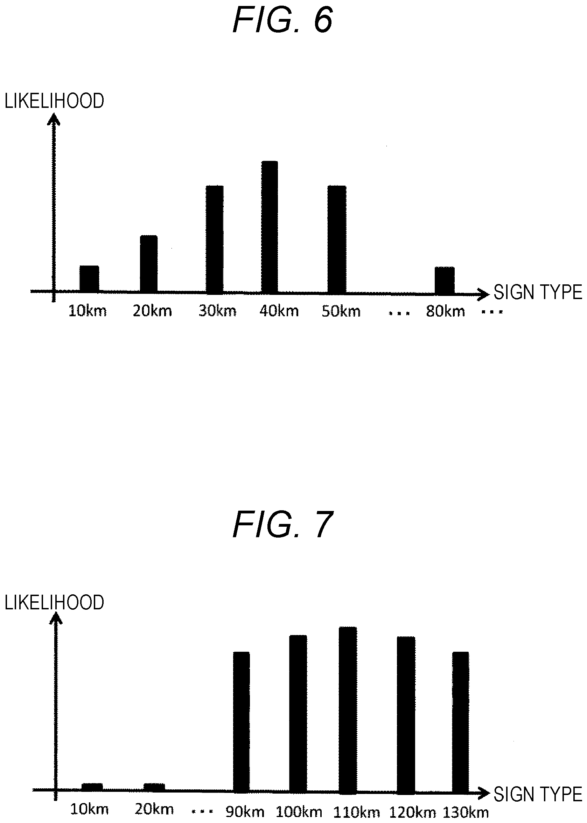

Examples of traffic standards are illustrated in FIGS. 4 and 5. FIGS. 4 and 5 are regulatory standards for the speed limit in ordinary roads and expressways, respectively. For example, in a case where the travel environment acquisition unit 102 has acquired the travel environment information that the current road type is an ordinary road, the number of lanes is two, and the pedestrian traffic volume is large, FIG. 6 is calculated as likelihoods for displayed content based on the travel environment, using the traffic standard in FIG. 4. In addition, when the travel environment acquisition unit 102 has acquired information that the current road type is an expressway, the curve radius is 500 m, the lane width is 4 m, and the shoulder width is 2 m, the respective pieces of information relating to the curve radius, the lane width, and the shoulder width are combined on the basis of the traffic standard in FIG. 5 and FIG. 7 is calculated as likelihoods for displayed content based on the travel environment. Thereafter, the output of the displayed content candidate extraction unit 101 and the result illustrated in FIG. 6 or 7 are subjected to sum or product computation for each item of displayed content, and displayed content with a highest likelihood is employed as a determination result.

With such a procedure, it is possible to consider the likelihoods different for each item of displayed content, on the basis of the acquired travel environment and, even in a situation where a road sign or a pavement marking only partially appear due to occlusion or the like, the displayed content can be determined using the travel environment as a reference.

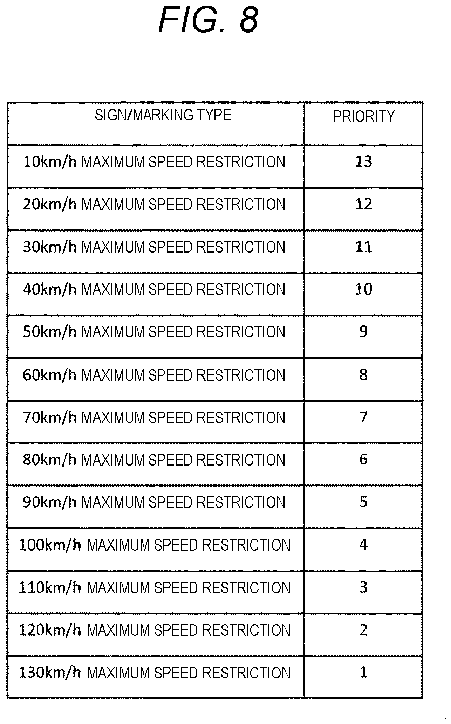

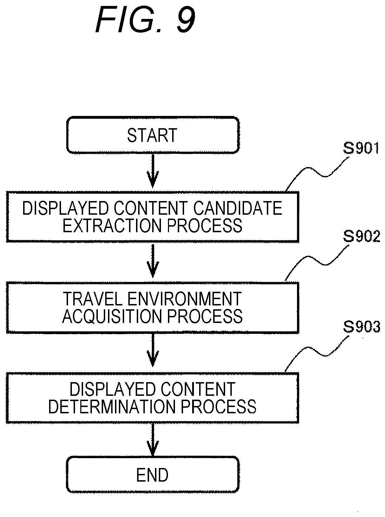

The displayed content candidate determination unit 103 may settle the result in consideration of not only the result of the displayed content candidate extraction unit 101 and the result of the travel environment acquisition unit 102 but also predetermined priorities. For example, priorities such as those illustrated in FIG. 8 may be set beforehand such that the priority in FIG. 9 is added to the likelihood by the displayed content candidate extraction unit 101, or the priority in FIG. 9 is added to the likelihood calculated from the likelihood by the displayed content candidate extraction unit 101 and the travel environment acquired by the travel environment acquisition unit 102 to determine displayed content with a highest likelihood.

With this procedure, when safety is taken into consideration as the priority, it is possible to determine displayed content in consideration of safety.

FIG. 9 is a flowchart representing the operation of the displayed content recognition device of an illustrative example.

In the displayed content recognition device of the illustrative example, the displayed content candidate extraction unit 101 firstly performs an image process and extracts a candidate for content for a road sign or a pavement marking in the image (a displayed content candidate extraction process S901 in FIG. 9). Thereafter, the travel environment acquisition unit 102 acquires the travel environment such as the expressway, the ordinary road, the number of lanes, the number of pedestrians, and the road shape (a displayed content candidate extraction process S902 in FIG. 9). Then, the displayed content determination unit 103 selects one of the extracted candidates matching the travel environment (a displayed content candidate extraction process S903 in FIG. 9).

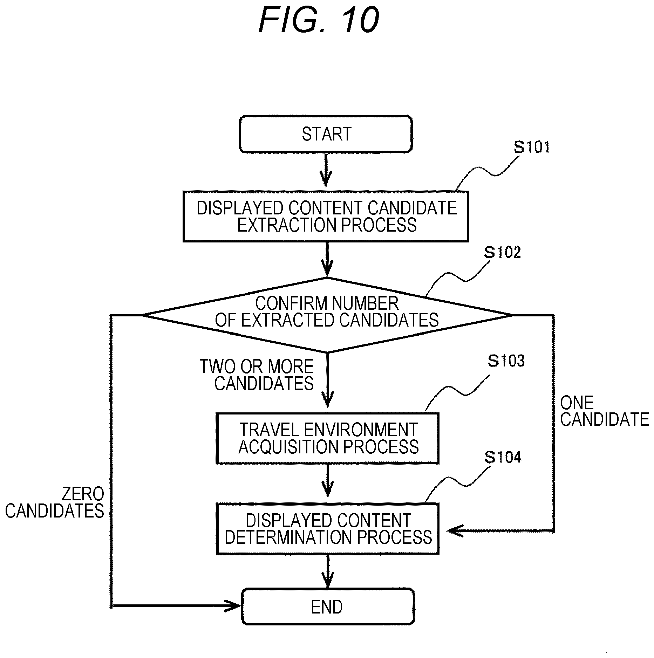

In FIG. 9, the travel environment is always acquired (the displayed content candidate extraction process S902 in FIG. 9) when the displayed content candidate is extracted (the displayed content candidate extraction process S901 in FIG. 9). As illustrated in FIG. 10, however, the travel environment may be acquired only when multiple candidates are extracted in extracting the displayed content candidate.

As illustrated in FIG. 10, the displayed content candidate extraction unit 101 first performs an image process and extracts a candidate for content for a road sign or a pavement marking in the image (a displayed content candidate extraction process S101 in FIG. 10). Thereafter, when the number of candidates is plural as a consequence of confirming the number of candidates, the travel environment acquisition unit 102 acquires the travel environment (S103 in FIG. 10), and the displayed content determination unit 103 determines displayed content for the road sign or the pavement marking on the basis of the outputs of the displayed content candidate extraction unit 101 and the travel environment acquisition unit 102 (S104 in FIG. 10). Meanwhile, when the number of candidates is only one, the displayed content determination unit 103 determines displayed content for the road sign or the pavement marking on the basis only of the result of the displayed content candidate extraction unit 101 (S104 in FIG. 10). In addition, when the number of candidates is zero, displayed content for the road sign or the pavement marking is not determined.

With such a procedure, unneeded processing time can be reduced because it is not necessary to acquire the travel environment in a case where a road sign or a pavement marking can be accurately recognized only by image recognition. Furthermore, with this process, in a case where a sign is present around the host vehicle and the displayed content can be settled only by image recognition, the recognition result does not vary even if the travel environment is varied.

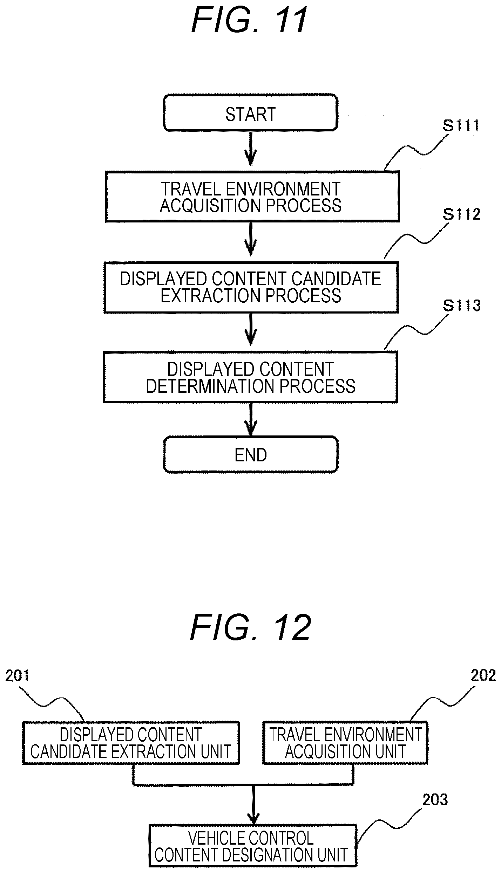

In both of the flowcharts illustrated in FIGS. 9 and 10, the displayed content candidate extraction unit 101 first extracts a candidate for content for a road sign or a pavement marking in the image and thereafter the travel environment acquisition unit 202 acquires the travel environment. However, as illustrated in FIG. 11, a process may be employed such that the travel environment acquisition unit 202 acquires the travel environment and thereafter the displayed content candidate extraction unit 101 extracts a candidate for content for a road sign or a pavement marking in the image.

In the process illustrated in FIG. 11, the travel environment acquisition unit 102 firstly acquires the travel environment (a travel environment acquisition process Sill in FIG. 11). Next, the displayed content candidate extraction unit 101 extracts a candidate for content for a road sign or a pavement marking (a travel environment acquisition process S112 in FIG. 11), but at this time, only a candidate satisfying the travel environment acquired by the travel environment acquisition unit 102 is extracted. For example, when the travel environment acquisition unit 102 has acquired information that the number of pedestrians is very large, it is judged that the host vehicle is traveling on an ordinary road and a maximum speed restriction sign for 80 km/h or faster installed on the expressway is not extracted. Thereafter, the displayed content determination unit 103 selects a candidate extracted as a displayed content candidate, thereby specifying displayed content for the road sign or the pavement marking in the image.

With such a procedure, when the displayed content candidate extraction unit 101 extracts candidates by template matching, it is possible to limit the number of times of template matching because the number of candidates to be extracted can be limited, and a shorter processing time can be achieved.

### Example

Next, an example useful to understand the present invention will be described.

FIG. 12 depicts functional blocks illustrating the configuration of a displayed content recognition device according to the present example. The displayed content recognition device of the present example includes: a displayed content candidate extraction unit 201 that extracts a candidate for displayed content for a displayed object on the basis of camera images; a travel environment acquisition unit 202 that acquires travel environment of a host vehicle; and a vehicle control content designation unit 203 that designates vehicle control content on the basis of the candidates for the displayed content extracted by the displayed content candidate extraction unit 201 and the travel environment acquired by the travel environment acquisition unit 202.

The displayed content candidate extraction unit 201 first specifies an area of an acquired image, specifically, in which portion of the image a road sign or a pavement marking appears. Thereafter, a candidate for displayed content for the road sign or the pavement marking is extracted for the specified area.

The travel environment acquisition unit 202 uses at least one of a camera image, vehicle speed information, or map information registered in a car navigation system to acquire the travel environment around the host vehicle relating to an installation standard for road signs and pavement markings, including expressway, ordinary road, the number of lanes, the number of pedestrians, presence/absence of a median strip, and road shapes such as curve radius, lane width, and shoulder width.

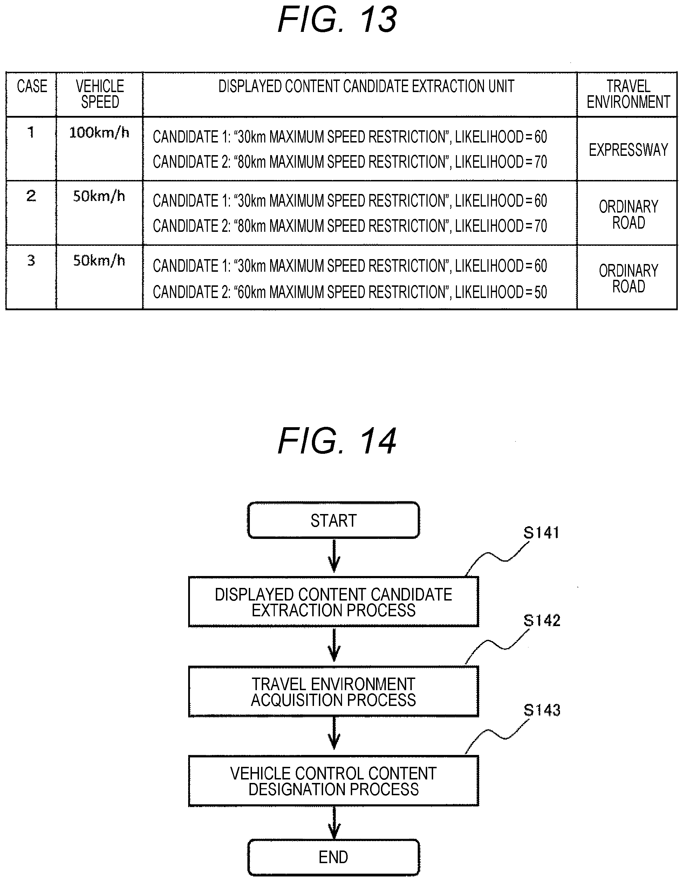

The vehicle control content designation unit 203 receives the outputs of the displayed content candidate extraction unit 201 and the travel environment acquisition unit 202 as inputs and settles the control content for the vehicle. A method of designating the vehicle control content by the vehicle control content designation unit 203 will be described with reference to FIG. 13. FIG. 13 illustrates the current vehicle speed and outputs of the displayed content candidate extraction unit 201 and the travel environment acquisition unit 202.

Case 1 in FIG. 13 represents that two candidates, namely, a 30 km/h maximum speed restriction sign and an 80 km/h maximum speed restriction sign are extracted by the displayed content candidate extraction unit 201 and the host vehicle speed is 100 km/h when the expressway is acquired as the travel environment. At this time, since the 30 km/h maximum speed sign is not installed on the expressway, the control content candidate extraction unit determines that the road sign in the image is the 80 km/h maximum speed sign and settles a brake control signal for lowering the current vehicle speed of 100 km/h down to 80 km/h.

Case 2 in FIG. 13 represents that two candidates, namely, a 30 km/h maximum speed restriction sign and an 80 km/h maximum speed restriction sign are extracted by the displayed content candidate extraction unit 201 and the host vehicle speed is 50 km/h when information indicating the ordinary road is acquired as the travel environment. At this time, since the 80 km/h maximum speed sign is not installed on the ordinary road, the control content candidate extraction unit determines that the road sign in the image is the 30 km/h maximum speed sign and settles a brake control signal for lowering the current vehicle speed of 50 km/h down to 30 km/h.

Case 3 in FIG. 13 represents that two candidates, namely, a 30 km/h maximum speed restriction sign and a 60 km/h maximum speed restriction sign are extracted by the displayed content candidate extraction unit 201 and the host vehicle speed is 50 km/h when information indicating the ordinary road is acquired as the travel environment. At this time, in the control content candidate extraction unit, since both of 30 km/h maximum speed limitation and 60 km/h maximum speed limitation have the possibility of being installed on the ordinary road, the vehicle control content designation unit 203 refers to the likelihoods output by the displayed content candidate extraction unit 201 and settles a brake control signal for lowering the current vehicle speed of 50 km/h down to 30 km/h having a higher likelihood.

As described above, according to the present example, even when the recognition result is ambiguous only by image recognition and the vehicle control signal cannot be settled, the vehicle control signal can be generated using the travel environment.

In the present example, the vehicle control content designation unit 203 designates the vehicle control signal on the basis of one candidate that matches the travel environment acquired by the travel environment acquisition unit 202, from among the candidates extracted by the displayed content candidate extraction unit 201. However, this configuration may be changed to a configuration described below, in which the travel environment acquired by the travel environment acquisition unit 202 is converted into the likelihood of a road sign or a pavement marking installed around the host vehicle, on the basis of the traffic standard, and a result of the conversion and the result of the displayed content candidate extraction unit 201 are combined to designate the vehicle control content.

For example, when the travel environment acquisition unit 202 has acquired the travel environment information that the current road type is an ordinary road, the number of lanes is two, and the pedestrian traffic volume is large, FIG. 6 is calculated as likelihoods for displayed content based on the travel environment, using the traffic standard in FIG. 4. In addition, when the travel environment acquisition unit 202 has acquired information that the current road type is an expressway, the curve radius is 500 m, the lane width is 4 m, and the shoulder width is 2 m, the respective pieces of information relating to the curve radius, the lane width, and the shoulder width are combined on the basis of the traffic standard in FIG. 5 and FIG. 7 is calculated as likelihoods for displayed content based on the travel environment. Thereafter, the output of the displayed content candidate extraction unit 201 and the result illustrated in FIG. 6 or 7 are subjected to sum or product computation for each item of displayed content, and the vehicle control content is designated using displayed content with a highest likelihood as a reference.

With such a procedure, it is possible to consider the likelihoods different for each item of displayed content, on the basis of the acquired travel environment and, even in a situation where a road sign or a pavement marking only partially appear due to occlusion or the like, the vehicle control content can be designated using the travel environment as a reference.

The vehicle control content designation unit 203 may settle the result on the basis of a predetermined priority. For example, priorities such as those illustrated in FIG. 9 are set beforehand and, when multiple candidates cannot be distinguished from each other, the vehicle control content is settled on the basis of a candidate with a higher priority.

With such a procedure, when safety is taken into consideration as the priority, it is possible to generate vehicle control signal in consideration of safety.

FIG. 14 is a flowchart representing the operation of a vehicle control device of the present example.

In the vehicle control device of the present example, the displayed content candidate extraction unit 201 firstly performs an image process and extracts a candidate for content for a road sign or a pavement marking in the image (a displayed content candidate extraction process S141 in FIG. 14). Thereafter, the travel environment acquisition unit 202 acquires the travel environment (a displayed content candidate extraction process S142 in FIG. 14). Then, the vehicle control content designation unit 203 settles the vehicle control signal on the basis of the results of the displayed content candidate extraction unit 201 and the travel environment acquisition unit 202 (a vehicle control content designation process S143 in FIG. 14).

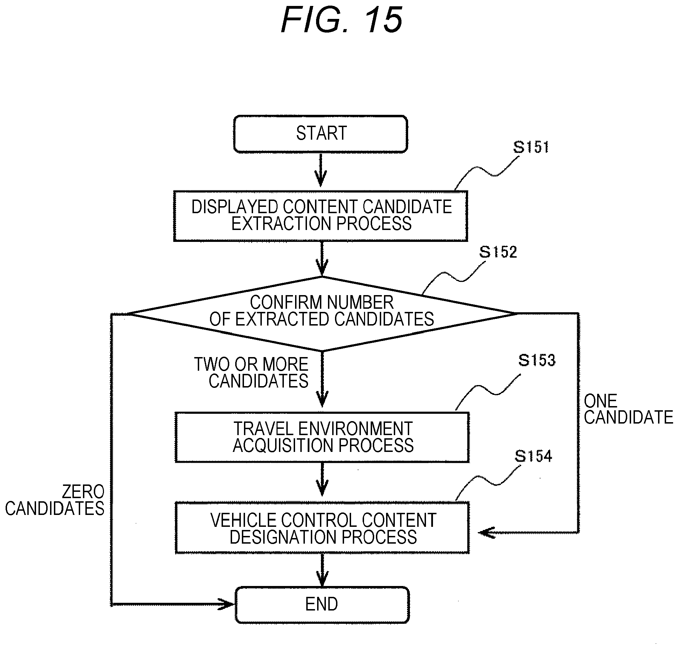

In FIG. 14, the travel environment is always acquired (the displayed content candidate extraction process S142 in FIG. 14) when the displayed content candidate is extracted (the displayed content candidate extraction process S141 in FIG. 14). As illustrated in FIG. 15, however, the travel environment may be acquired only when multiple candidates are extracted in extracting the displayed content candidate.

As illustrated in FIG. 15, the displayed content candidate extraction unit 201 first performs an image process and extracts a candidate for content for a road sign or a pavement marking in the image (a displayed content candidate extraction process S151 in FIG. 15). Next, the number of candidates for content for the road sign or the pavement marking is acquired. Then, on the basis of this number of candidates, it is designated whether the travel environment is to be acquired (S152 in FIG. 15). When the number of candidates is plural, the travel environment acquisition unit 202 acquires the travel environment (S153 in FIG. 5) and the vehicle control content is settled on the basis of the outputs of the displayed content candidate extraction unit 201 and the travel environment acquisition unit 202 (S154 in FIG. 15). Meanwhile, when the number of candidates is only one, the vehicle control content is settled on the basis only of the result of the displayed content candidate extraction unit 201 (S154 in FIG. 15). When the number of candidates is zero, control content is not settled.

With such a procedure, the processing time can be reduced because it is not necessary to acquire a redundant travel environment in a case where a road sign or a pavement marking can be accurately recognized only by image recognition.

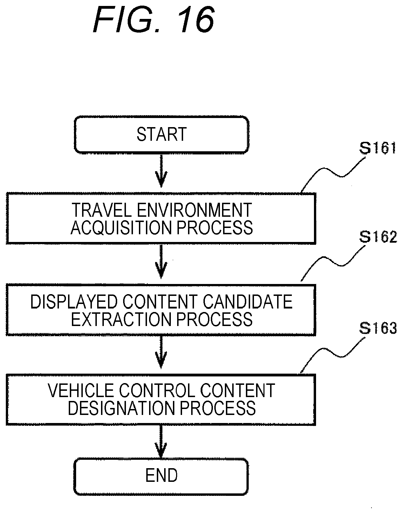

In both of the flowcharts illustrated in FIGS. 14 and 15, the displayed content candidate extraction unit 201 first extracts a candidate for content for a road sign or a pavement marking in the image and thereafter the travel environment acquisition unit 202 acquires the travel environment. However, as illustrated in FIG. 16, a process may be employed such that the travel environment acquisition unit 202 acquires the travel environment and thereafter the displayed content candidate extraction unit 201 extracts a candidate for content for a road sign or a pavement marking in the image.

In the process illustrated in FIG. 16, the travel environment acquisition unit 202 firstly acquires the travel environment (a travel environment acquisition process S161 in FIG. 16). Next, the displayed content candidate extraction unit 201 extracts a candidate for content for a road sign or a pavement marking (a travel environment acquisition process S162 in FIG. 16), but at this time, only a candidate satisfying the travel environment acquired by the travel environment acquisition unit 202 is extracted. Thereafter, the vehicle control content designation unit 203 designates vehicle control content.

As described above, the vehicle control content designation unit 203 performs vehicle control on the basis of displayed content for a road sign or a pavement marking in the image. However, a virtual desired value may be set instead of displayed content for a road sign or a pavement marking in the image such that the vehicle control signal is created so as to be in accordance with the desired value. For example, it is assumed that, the displayed content for a road sign in the image is determined as 50 km/h maximum speed restriction when the host vehicle speed is 40 km/h. In addition, at this time, when the travel environment acquisition unit acquires information that there are an enormous number of pedestrians around the host vehicle, for example, 20 km/h may be set as the desired value for the host vehicle speed such that a brake signal to bring the vehicle speed of 40 km/h close to 20 km/h is generated as vehicle control content.

With such a procedure, appropriate vehicle control can be realized according to the surrounding travel environment, instead of depending only on displayed content for road signs and pavement markings.

While the invention of the present application has been described thus far with reference to the embodiment and the example, the invention of the present application is not limited to the above-described embodiments. In particular, in the above embodiment and the example, the recognition of the maximum speed limitation sign among the road signs has been described especially in detail, but the recognition target of the invention of the present application is not limited to the maximum speed limitation sign and other road markings and other road signs are also treated as recognition targets. When these other types are treated as recognition targets, the invention of the present application can be carried out by acquiring the travel environment taking the installation standard into account. For example, a road sign for a pedestrian, a road closed sign for a large-sized automobile or the like, and a pedestrian crossing pavement marking can be used for recognizing displayed content by acquiring pedestrian information as a travel environment.

Various modifications understandable by those skilled in the art within the scope of the invention of the present application can be added to the configuration and details of the invention.

### Reference Signs List

101, 201 displayed content candidate extraction unit
102, 202 travel environment acquisition unit
103 displayed content determination unit
203 vehicle control content designation unit

## Claims

1. A displayed content recognition device comprising:
a displayed content candidate extraction unit (101) that is adapted to extract candidates for displayed content for a displayed object by template matching on the basis of camera images acquired by a camera that is mounted on a vehicle;
a travel environment acquisition unit (102) that is adapted to acquire the travel environment of the vehicle; and
a displayed content determination unit (103) that, when there are multiple candidates for the displayed content, is adapted to determine the displayed content using the travel environment,
wherein:
- the travel environment acquisition unit (102) is adapted to firstly acquire the travel environment, and
- the device is adapted to then determine which of the candidates satisfy the acquired travel environment, and **characterized in that**:
- the displayed content candidate extraction unit (101) is then adapted to perform the template matching limited to the candidates that have been determined to satisfy the acquired travel environment.

2. The displayed content recognition device according to claim 1, wherein, when the travel environment acquisition unit (102) has acquired the travel environment in advance and the displayed content candidate extraction unit (101) has extracted candidates for the displayed content, the displayed content determination unit (103) is adapted to determine the displayed content using the travel environment.

3. The displayed content recognition device according to claim 1, wherein, when the multiple candidates are associated with maximum speed restriction, the displayed content determination unit (103) is adapted to use at least any one of a road type, the number of lanes, presence/absence of a median strip, the number of pedestrians, a curve radius, a lane width, or a shoulder width, as the travel environment.

4. The displayed content recognition device according to claim 1, wherein the displayed content determination unit (103) is adapted to determine the displayed content on the basis of a predetermined priority.

5. The displayed content recognition device according to claim 4, wherein the predetermined priority is set on the basis of maximum speed restriction and the priority is set higher as a speed limit is lower.

6. The displayed content recognition device according to claim 1, wherein, when only one candidate has been extracted by the displayed content candidate extraction unit (101), the displayed content determination unit (103) is adapted to output the extracted candidate as a determination result.

## Patentansprüche

1. Vorrichtung zur Erkennung von angezeigten Inhalten, umfassend:
eine Anzeigeinhaltskandidaten-Extraktionseinheit (101), die dazu ausgelegt ist, Kandidaten für angezeigten Inhalt für ein angezeigtes Objekt durch Mustervergleich auf der Grundlage von Kamerabildern zu extrahieren, die von einer Kamera erfasst werden, die an einem Fahrzeug angebracht ist;
eine Reiseumgebungserfassungseinheit (102), die dazu ausgelegt ist, die Reiseumgebung des Fahrzeugs zu erfassen; und
eine Anzeigeinhalts-Bestimmungseinheit (103), die, wenn es mehrere Kandidaten für den angezeigten Inhalt gibt, dazu ausgelegt ist, den angezeigten Inhalt unter Verwendung der Reiseumgebung zu bestimmen,
wobei:
- die Reiseumgebungserfassungseinheit (102) dazu ausgelegt ist, zunächst die Reiseumgebung zu erfassen, und
- die Vorrichtung dazu ausgelegt ist, zu bestimmen, welche der Kandidaten die erfasste Reiseumgebung erfüllen, und **dadurch gekennzeichnet, dass**:
- die Anzeigeinhaltskandidaten-Extraktionseinheit (101) dann dazu ausgelegt ist, den Mustervergleich nur mit den Kandidaten durchzuführen, bei denen festgestellt wurde, dass sie die erfasste Reiseumgebung erfüllen.

2. Vorrichtung zur Erkennung von angezeigten Inhalten nach Anspruch 1, wobei, wenn die Reiseumgebungs-Erfassungseinheit (102) die Reiseumgebung im Voraus erfasst hat und die Anzeigeinhaltskandidaten-Extraktionseinheit (101) Kandidaten für den angezeigten Inhalt extrahiert hat, die Anzeigeinhalts-Bestimmungseinheit (103) dazu ausgelegt ist, den angezeigten Inhalt unter Verwendung der Reiseumgebung zu bestimmen.

3. Vorrichtung zur Erkennung von angezeigten Inhalten nach Anspruch 1, wobei, wenn die mehreren Kandidaten mit einer Höchstgeschwindigkeitsbeschränkung verbunden sind, die Anzeigeinhalts-Bestimmungseinheit (103) dazu ausgelegt ist, einen Straßentyp, die Anzahl der Fahrspuren, das Vorhandensein/Nichtvorhandensein eines Mittelstreifens, die Anzahl der Fußgänger, einen Kurvenradius, eine Fahrspurbreite und/oder eine Seitenstreifenbreite als Reiseumgebung zu verwenden.

4. Vorrichtung zur Erkennung von angezeigten Inhalten nach Anspruch 1, wobei die Anzeigeinhalts-Bestimmungseinheit (103) dazu ausgelegt ist, den angezeigten Inhalt auf der Grundlage einer vorgegebenen Priorität zu bestimmen.

5. Vorrichtung zur Erkennung von angezeigten Inhalten nach Anspruch 4, wobei die vorgegebene Priorität auf der Grundlage der Höchstgeschwindigkeitsbeschränkung eingestellt wird und die Priorität höher eingestellt wird, wenn die Geschwindigkeitsgrenze niedriger ist.

6. Vorrichtung zur Erkennung von angezeigten Inhalten nach Anspruch 1, wobei, wenn nur ein Kandidat durch die Anzeigeinhaltskandidaten-Extraktionseinheit (101) extrahiert wurde, die Anzeigeinhalts-Bestimmungseinheit (103) dazu ausgelegt ist, den extrahierten Kandidaten als Bestimmungsergebnis auszugeben.

## Revendications

1. Dispositif de reconnaissance de contenu affiché comprenant :
une unité (101) d'extraction de contenus candidats affichés qui est adaptée à extraire des candidats pour un contenu affiché pour un objet affiché par correspondance de modèles sur la base d'images de caméra acquises par une caméra qui est montée sur un véhicule ;
une unité (102) d'acquisition d'environnement de circulation qui est adaptée à acquérir l'environnement de circulation du véhicule ; et
une unité (103) de détermination de contenu affiché qui, lorsqu'il y a des candidats multiples pour le contenu affiché, est adaptée à déterminer le contenu affiché en utilisant l'environnement de circulation,
dans lequel :
- l'unité (102) d'acquisition d'environnement de circulation est adaptée à d'abord acquérir l'environnement de circulation, et
- le dispositif est adapté à ensuite déterminer lequel des candidats satisfait à l'environnement de circulation acquis, et **caractérisé en ce que** :
- l'unité (101) d'extraction de contenus candidats affichés est ensuite adaptée à effectuer la correspondance de modèles limitée aux candidats qui ont été déterminés satisfaire à l'environnement de circulation acquis.

2. Dispositif de reconnaissance de contenu affiché selon la revendication 1, dans lequel, lorsque l'unité (102) d'acquisition d'environnement de circulation a acquis l'environnement de circulation au préalable et que l'unité (101) d'extraction de contenus candidats affichés a extrait des candidats pour le contenu affiché, l'unité (103) de détermination de contenu affiché est adaptée à déterminer le contenu affiché en utilisant l'environnement de circulation.

3. Dispositif de reconnaissance de contenu affiché selon la revendication 1, dans lequel, lorsque les candidats multiples sont associés avec une limitation de vitesse maximum, l'unité (103) de détermination de contenu affiché est adaptée à utiliser au moins un(e) quelconque parmi un type de route, le nombre de voies, la présence/absence d'une bande médiane, le nombre de piétons, un rayon de courbe, une largeur de voie, ou une largeur d'accotement, comme l'environnement de circulation.

4. Dispositif de reconnaissance de contenu affiché selon la revendication 1, dans lequel l'unité (103) de détermination de contenu affiché est adaptée à déterminer le contenu affiché sur la base d'une priorité prédéterminée.

5. Dispositif de reconnaissance de contenu affiché selon la revendication 4, dans lequel la priorité prédéterminée est fixée sur la base de la limitation de vitesse maximum et la priorité est fixée plus haute alors que la limitation de vitesse est plus basse.

6. Dispositif de reconnaissance de contenu affiché selon la revendication 1, dans lequel, lorsqu'un seul candidat a été extrait par l'unité (101) d'extraction de contenus candidats affichés, l'unité (103) de détermination de contenu affiché est adaptée à délivrer en sortie le candidat extrait comme un résultat de détermination.
